# EUROPÄISCHE PATENTSCHRIFT

(11) **EP 3 258 297 B1**
(45) Veröffentlichungstag und Bekanntmachung des Hinweises auf die Patenterteilung: **16.04.2025**
(21) Anmeldenummer: 17166751.2
(22) Anmeldetag: 08.12.2015
(51) Int. Cl.: G01V 8/10

(54) **LICHTGITTERANORDNUNG**
LIGHT GRID ARRANGEMENT
SYSTÈME DE GRILLE LUMINEUSE

(30) Priorität: 08.12.2014 DE 102014018009
(43) Veröffentlichungstag der Anmeldung: 20.12.2017
(62) Teilanmeldung aus: 15198553.8
(73) Patentinhaber: Gummi-Welz GmbH u. Co. KG Gummi-Kunststofftechnik-Schaumstoffe, 89231 Neu-Ulm (DE)
(72) Erfinder:
(74) Vertreter: Ter Meer Steinmeister & Partner

(56) Entgegenhaltungen:
- EP-A1- 2 492 714
- DE-A1- 102006 053 708
- US-A- 4 794 248
- US-A- 5 057 695
- US-A- 5 698 824
- US-A- 5 886 307
- US-B1- 6 167 991

## Beschreibung

Die Erfindung betrifft eine Lichtgitteranordnung nach Anspruch 1.

Eine relative Bewegung von Lichtsendern und -empfängern tritt beispielsweise bei Lichtschrankenanordnungen auf, die an Dreh-, Schwenk- oder Schiebetüren oder beweglichen Maschinenteilen befestigt sind. Diese Lichtschrankenanordnungen werden beispielsweise zur Erkennung von Personen oder Gegenständen verwendet. Gegenüber feststehend montierten Lichtschrankenanordnungen sind bei beweglich montierten Lichtsendern und Lichtempfängern besondere Anforderungen zu beherrschen.

Durch die Veränderung von Winkel und Abstand zwischen Lichtsendern und Lichtempfängern kann sich die Stärke der bei freiem Überwachungsbereich von den Lichtempfängern abgegebenen Empfangssignale um mehrere Größenordnungen verändern. Ursachen für die Veränderung der Empfangssignalstärke sind einerseits die räumliche Intensitätsverteilung (Strahlform) der Lichtsender beziehungsweise die Empfindlichkeitsverteilung der Lichtempfänger, andererseits die gemäß dem Abstandsgesetz mit dem Quadrat der Distanz abnehmende Bestrahlungsstärke.

Die durch die Relativbewegung verursachte große Dynamik der Empfangssignalstärke erschwert die Auswertung der Empfangssignale. Beispielsweise wird bei zu hoher Signalstärke die Empfängerseite übersteuert, während bei zu geringer Signalstärke Störsignale wie Rauschen der Auswerteschaltung die Bewertung der Signalstärke beeinträchtigen. Zudem werden zur Objekterkennung die von den Lichtempfängern abgegebenen Empfangssignale mit einer Schaltschwelle verglichen. Diese Schaltschwelle wird üblicherweise als bestimmter Teil der bei freiem Überwachungsbereich vorliegenden Signalstärke festgesetzt. Da sich dieser Bezugswert bei bewegten Lichtschrankenanordnungen wie oben ausgeführt um mehrere Größenordnungen verändem kann, ist es schwierig, die Schaltschwelle ohne Kenntnis des Bewegungszustandes dynamisch der positionsabhängigen Empfangssignalstärke so nachzuführen, dass Hindernisse zuverlässig erkannt werden.

Eine bekannte Ursache von Fehlschaltungen bei Lichtschranken ist die Umspiegelung, also ein indirekter Lichtweg vom Lichtsender zum Lichtempfänger über ein reflektierendes Objekt, das umspiegelte Signal größer, so dass anhand des Empfangssignales nicht feststellbar ist, ob sich ein Objekt im Überwachungsbereich der Lichtschrankenanordnung befindet. Ein bekanntes Mittel zur Verringerung von Umspiegelung und zur Erhöhung der Empfangssignalstärke ist die Verwendung eng bündelnder Optiken, wie bespielsweise in DIN EN 61496 beschrieben. Solche Optiken sind jedoch nicht anwendbar, wenn eine rotatorische Bewegungskomponente vorliegt, vielmehr müssen die Lichtsender und Lichtempfänger in diesem Fall weitwinklig ausgeführt sein, um den durch die Bewegung vorgegebenen Winkelbereich abdecken zu können. Weitwinklige Lichtsender und Lichtempfänger bewirken niedrigere Empfangssignalstärken und dadurch geringere Reichweiten.

Zudem weisen die Sende- und Empfangslichtkeulen üblicher Lichtsender und Lichtempfänger einen kreisförmigen Querschnitt auf; als Folge wird ein unnötig großer Raumwinkel bestrahlt bzw. erfasst. Dadurch verringert sich ebenfalls das Nutzsignal, es erhöht sich das Risiko, fremde Störsignale zu empfangen, und es wird ein großer für Umspiegelung anfälliger Raum aufgespannt.

Eine aus der US 6 167 991 B1 bekannte Lichtschrankenanordnung der eingangs genannten Art dient als Sicherheitseinrichtung für Aufzugtüren. An den Stirnseiten der Türen eines Aufzug-Türsystems sind mehrere Lichtsender und Lichtempfänger angeordnet. Eine Bestimmung des Abstandes der Lichtsender und -empfänger erfolgt anhand der abstandsabhängigen Ausleuchtung der Lichtempfänger. Mit dem Schließen der Aufzugtüren wird die dreidimensionale Erfassungszone für die Personenfeststellung verkleinert. Zugleich erfolgt eine Änderung der Sendeenergie und/oder der Signalbewertung.

In der US 5 886 307 A ist eine Lichtgitteranordnung als Sicherheitseinrichtung für Aufzugstüren beschrieben, bei der ebenfalls die Lichtintensität mit dem Schliessen der Türen verringert wird. Diese Anordnung wird in Schiebetüren verwendet.

Bei einem Kontrollsystem für eine Automatik-Schwingtüranlage gemäß US 4 669 218 A ist eine Anzahl von Lichtsendern und Lichtempfängern vorgesehen. Mit Durchlaufen der verschiedenen Winkelstellungen der Tür werden jeweils entsprechende Lichtsender und Sendeenergien ausgewählt, um den gewünschten Personenüberwachungsbereich zu erhalten.

Für die Überwachung von Automatik-Schwingtüren ist es des Weiteren aus der US 4 467 251 A bekannt, Lichtsender mit divergierenden Lichtstrahlen und entsprechend weitwinklig ausgelegte Lichtempfänger zu verwenden. Bei relativ nahe befindlichen Gegenständen oder Personen werden relativ starke Signale von mehreren Lichtempfängern festgestellt. Es ist beschrieben, die Lichtsender mit periodischen Impulsen anzusteuern, um den Überwachungsbereich mit modulierten Überwachungssignalen zu überstreichen.

Lichtgitter zur berührungslosen Türüberwachung in Omnibussen und Bahnen sind z.B. aus der DE 10 2010 005 132 B3 bekannt. Bei einer Ausführung gemäß EP 2 589 991 A2 ist die Lichtgitterleiste im Türdichtungsprofil eingebaut. Der Einstiegsbereich wird mit einer Kombination aus parallelen und gekreuzten Lichtstrahlen überwacht. Bereits die Unterbrechung eines Lichtstrahls löst einen Schaltimpuls aus, der zur Türoffenhaltung oder Türreversierung führt.

US 5 698 824 A betrifft eine Aufzugsvorrichtung, die zur Steuerung der Bewegung von Schiebetüren einer Aufzugskabine bzw. einem Fahrkorb und US 4 794 248 A betrifft ein Detektionssystem für die Steuerung von zwei gegenläufigen Schiebetüren.

US 5 057 695 A betrifft ein Verfahren und eine Vorrichtung zur Messung der inneren Eigenschaften einer Substanz mittels Lichtstreuung.

EP 2 492 714 A1 betrifft ein Verfahren zum Betreiben eines Sicherheitslichtgitters. Das Verfahren umfasst: Aussenden von Lichtstrahlen von Lichtsendern einer ersten und/oder zweiten optischen Einheit. Empfangen der Lichtstrahlen mit Lichtempfängern der zweiten und/oder ersten optischen Einheit und Erzeugen von Empfangssignalen, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden; Auswerten der Amplituden aller Empfangssignale und Ausgeben des Sicherheitsschaltsignals, wenn durch einen unzulässigen Objekteingriff wenigstens eine der Amplituden in einem bestimmten Bereich liegt, wobei ein Lichtstrahl zwischen Lichtsendern und Lichtempfängern als unterbrochen gilt, wenn empfangenes Licht eine erste untere Schaltschwelle unterschreitet und das Sicherheitsschaltsignal ausgebbar ist, wenn wenigstens ein Lichtstrahl unterbrochen ist, wobei eine zweite untere Schaltschwelle in der Auswerteeinheit vorgesehen ist, die über der ersten unteren Schaltschwelle liegt, deren Überschreitung ein freies Schutzfeld anzeigt.

DE 10 2006 053708 A1 betrifft eine Karusselldrehtür mit zwei einander gegenüberliegenden, konzentrischen sowie teilzylindrischen Trommelwänden sowie mit mehreren um die zentrale Mittelachse drehbaren Türflügeln sowie mit einem Boden und einer Decke weist ein Sensorsystem mit Lichtschranken auf, welches erkennt, ob sich im Bereich der Innenflächen der Karusseldrehtür Objekte befinden.

Bei Innenschwenktüren von Omnibussen durchlaufen die Türen einen Schwenkbereich von 90° und erfahren zugleich eine Bewegung mit translatorischer Komponente. Aufgrund des in größerer Türnähe stärkeren Signals kann es zu einer Störmeldung kommen, wenn jemand im Außenkeulenbereich steht. Selbst bei einer Anpassung der Sendeenergie und der Empfangsempfindlichkeit kann es zu Erfassungsfehlern kommen, da bei dieser Anwendung aufgrund des besonderen Bewegungsablaufs, den die Lichtsender und -empfänger zusammen mit ihrem Träger, hier der Innenschwenktür, durchlaufen, besonders hohe Anpassungsanforderungen bestehen.

Der Erfindung liegt die Aufgabe zugrunde, eine Lichtgitteranordnung zu schaffen, die eine zuverlässige Erfassung von Personen und Gegenständen im Überwachungsbereich ermöglicht und die für den Einsatz bei Innenschwenktüren von Omnibussen oder Falttüren in Bus und Bahn geeignet ist.

Diese Aufgabe ist durch die Erfindung bei einer Lichtgitteranordnung mit den Merkmalen des Anspruchs 1 gelöst. Vorteilhafte Weiterbildungen der erfindungsgemäßen Lichtgitteranordnung sind Gegenstand der abhängigen Ansprüche.

Eine Lichtgitteranordnung umfasst somit einen oder mehrere Lichtsender und einen oder mehrere Lichtempfänger, wobei die Lichtsender und Lichtempfänger auf Trägern montiert sind, von denen ein Träger fest montiert ist und der andere rotatorisch beweglich ist, wobei die Träger die Türen selbst sein können. Basierend auf dem jeweiligen Abstand zwischen Lichtsender(n) und Lichtempfänger(n) werden die Sendeenergie und die Signalbewertung geändert. Dabei wird die Komponente der Strahlstärke in Richtung der Lichtempfänger und/oder die Strahlform der Lichtsender und/oder die Empfindlichkeit und/oder die Empfangskeule der Lichtempfänger in Abhängigkeit von der relativen Position der Träger und dem Abstand zwischen Lichtsendern und Lichtempfängern angepasst.

Bei der Lichtgitteranordnung wird eine vom Bewegungszustand bzw. der jeweiligen Trägerposition abhängige Intensität der Lichtsender und/oder eine vom Bewegungszustand abhängige Empfindlichkeit der Lichtempfänger einschließlich Signalbewertung so gewählt, dass einem Bewegungszustand mit geringer Distanz zwischen Lichtsendern und Lichtempfängern eine geringere Intensität und/oder Empfindlichkeit zugeordnet ist als einem Bewegungszustand, d.h. Position der Träger, mit großer Distanz zwischen Lichtsendern und Lichtempfängern. Insbesondere die Strahlform von Lichtsendern und Lichtempfängern geht in die Abstandsanpassung mit ein. Durch die Anpassung der Intensität der Lichtsender, der Empfindlichkeit der Lichtempfänger und der Signalbewertung sowie der Strahlform von Lichtsendern und Lichtempfängern an den Abstand zwischen Lichtsendern und Lichtempfängern können Schwankungen in der Stärke der Empfangssignale reduziert oder eine Übersteuerung des Signalpfades oder Störungen durch Fremdsignale und Rauschen vermieden werden. Die ausgeglichene Signalbewertung verbessert die bestimmungsgemäße Erkennung von Objekten.

Es können Teilbereichen des senderseitig und/oder empfängerseitig abzudeckenden Winkelbereiches separate Lichtsender und/oder Lichtempfänger zugeordnet sein. Die Aufteilung des senderseitig und/oder empfängerseitig abzudeckenden Winkelbereiches auf separate Lichtsender und/oder Lichtempfänger ermöglicht eine schmalere Winkelbereiche überstreichende Strahlform und als Folge der engeren Bündelung eine höhere Strahlstärke der Lichtsender und/oder eine höhere Empfindlichkeit der Lichtempfänger. Ein weiterer Vorteil der Aufteilung und Bündelung ist die Reduzierung von Zahl und Intensität von Umspiegelungswegen.

Die Strahlform der Lichtsender und Lichtempfänger stellt eine besonders einfache Anpassungsmöglichkeit von Signalstärke und Empfindlichkeit an den vom Bewegungszustand abhängigen Sende- bzw. Empfangswinkel dar. Vorteile einer solchen optischen Anpassung sind die durch die optische Bündelung große Reichweite und die unmittelbare Abhängigkeit vom Bewegungszustand ohne die Notwendigkeit einer elektrischen Bestimmung des Bewegungszustandes, was einen kostengünstigen Aufbau ermöglicht.

Bei einer Ausführungsform des Lichtgittersystems wird die Strahlform der Empfänger entsprechend den Änderungen der Strahlstärke und Strahlform der Lichtsender angepasst. Dies kann beispielsweise dadurch realisiert sein, dass einstellbare oder verstellbare Lichtlenkelemente für die Lichtsender und/oder die Lichtempfänger vorgesehen sind. So können beispielsweise zur Strahlformänderung während der Bewegung der Lichtsender bzw. Lichtempfänger änderbare Linsen oder auch verstellbare Spiegel vorgesehen sein.

Die vom Bewegungszustand abhängige Intensität der Lichtsender und/oder die vom Bewegungszustand abhängige Empfindlichkeit der Lichtempfänger kann zumindest teilweise durch strahlformende Elemente gesteuert werden. Eine Ausgestaltung verwendet mechanische Blenden, die der Bewegung nachgeführt werden. Auf diese Weise ist eine dynamische Änderung von Strahlrichtung und Strahlwinkel möglich.

Neben der optischen Anpassung an den Bewegungszustand können auch Sender- und Empfängerelemente verwendet werden, die die entfernungsabhängige Signalstärkeänderung auf optischem Wege nicht oder nur teilweise kompensieren, und die Anpassung an den Bewegungszustand wenigstens teilweise auf elektrischem Weg erfolgen. Die elektrische Steuerung ist über die Ansteuerleistung der Sender und/oder der Verstärkung und Bewertung der Empfängersignale möglich. Dabei sind die Verstärkung der von den Lichtempfängern abgegebenen elektrischen Signale und die Bewertung der Signale als Einheit zu betrachten: In ihrer Wirkung hinsichtlich der Bewertung der vom Lichtempfänger empfangenen Lichtsignale ist eine elektrische Verstärkungserhöhung einer entsprechenden Reduzierung der zur Bewertung herangezogenen Vergleichsgröße gleichwertig.

Die Intensität der Lichtsender zumindest teilweise durch Variation von deren Ansteuerleistung und/oder die empfangsseitige Empfindlichkeit kann zumindest teilweise durch eine vom Bewegungszustand abhängige Variation der Verstärkung der Empfangssignale und/oder der Schaltschwelle gesteuert werden. Zur elektrischen Nachführung durch Anpassung der Ansteuerleistung, der Empfängerempfindlichkeit oder der Auswahl von Teilwinkelbereichen zugehörigen Lichtwegen ist in der Auswerteschaltung eine Information über den Bewegungszustand erforderlich. Diese Information kann von außerhalb der Lichtschrankenanordnung zugeführt werden, beispielsweise von der Steuerung des Antriebes der beweglichen Teile oder durch Positionssensoren. Ebenso ist eine Bestimmung innerhalb der Lichtgitteranordnung durch Bewertung der Empfangssignale der einzelnen Lichtwege möglich. Eine besonders vorteilhafte Ausgestaltung verwendet Inertialsensoren zur sicheren und von Hindernissen im Überwachungsbereich unabhängigen Bestimmung des Bewegungszustandes. Diese Sensoren können wahlweise innerhalb oder außerhalb der Gehäuseteile der Lichtschrankenanordnung angeordnet sein. Die Verfahren zur Ableitung von Positions- und Winkelinformationen aus den Rohdaten von Inertialsensoren beispielsweise durch ein- bzw. zweifache Integration von Drehraten- bzw. Beschleunigungssignalen sowie die rechnerische Kombination mehrerer Signalquellen sind allgemein bekannt. Es können beispielsweise auch Drehratensensoren und/oder Magnetfeldsensoren zur Erfassung des Bewegungszustandes eingesetzt werden. Die Kombination der genannten Signalquellen, beispielsweise Bewertung der Empfangssignale und Inertialsensoren, erhöht die Qualität der Bestimmung des Bewegungszustandes.

Es kann eine positions- bzw. distanzabhängige Nachführung der Lichtsender und Lichtempfänger erfolgen derart, dass die vom Bewegungszustand abhängige Intensität der Lichtsender und/ oder die vom Bewegungszustand abhängige Empfindlichkeit der Lichtempfänger einschließlich Signalbewertung mit Zunahme des gegenseitigen Abstandes zwischen Lichtsendern und Lichtempfängern zunimmt.

Optiken zur Strahlformung können in den Lichtsendern und Lichtempfängern integriert oder von ihnen getrennt ausgeführt sein. Eine besonders vorteilhafte Ausgestaltung strahlformender Elemente sind astigmatische Optiken, z.B. torische oder zylindrische, die den Strahlengang in der Ebene senkrecht zur Drehachse breiter gestalten und senkrecht zu dieser Ebene eine für große Intensität und Umspiegelungssicherheit erwünschte Bündelung erzielen. Strahlformende Optiken lassen sich günstig in Form extrudierter Profile herstellen. Eine weitere Kostenersparnis kann dadurch erzielt werden, dass Teile des Gehäuses oder der Halterung als strahlformende bzw. Lichtlenkelemente ausgebildet sind, z.B. das vorerwähnte extrudierte Profil ein Hohlprofil ist, das einen Großteil des Sensorgehäuses darstellt. Die Optiken können auch als Stufenlinse oder Stufenspiegel ausgeführt werden, sowie als diffraktive Elemente, wodurch eine geringere Materialstärke ermöglicht wird.

Wenn sich Lichtsender und Lichtempfänger aufgrund der Drehbewegung des Trägers relativ zueinander drehen, können zur Kompensation der geänderten Strahlungswege die Lichtsender und/oder Lichtempfänger auf beweglichen Halterungen oder Leisten angebracht sein. Es können dann die Halterungen oder auch die ganze Leiste oder Leistenteile mechanisch nachgefahren werden, um den erforderlichen Überwachungsbereich und die benötigten Signaleigenschaften für eine zuverlässige Überwachung zu erzielen.

Bei einer Aus führungs form des Lichtgitters bestehen die Lichtsender aus mindestens zwei Einzelsendern, deren Sendehauptkomponenten in unterschiedliche Richtungen weisen und unterschiedliche Strahlstärken aufweisen, und/oder die Lichtempfänger bestehen aus mindestens zwei Einzelempfängern, deren Empfangshauptausrichtungen in unterschiedliche Richtungen weisen und die unterschiedliche Empfindlichkeiten aufweisen. Das heißt, es werden mindestens zwei Sätze von Sendern und Empfängern verwendet, einer für den Fall, in dem sich Lichtsender und Lichtempfänger in geringer Entfernung von einander befinden, und einer für den Fall, in dem sich Lichtsender und Lichtempfänger in größerer Entfernung befinden. Bei einer solchen Konstellation können die Lichtsender und die Lichtempfänger gleich an ihren jeweiligen Einsatzbereich (Reichweite: Nahbereich oder Fernbereich) angepasst ausgelegt werden, beispielsweise mit unterschiedlicher Sendeleistung und Empfangsempfindlichkeit, und auch die Strahlform von Lichtsendern und Lichtempfängern entsprechend ausgewählt werden.

Es ist auch eine Ausführung der Lichtgitteranordnung möglich, bei der die Lichtsender aus mindestens zwei Einzelsendern bestehen, deren Sendehauptkomponenten in unterschiedliche Richtungen weisen und unterschiedliche Strahlstärke aufweisen, wobei die Einzelsender in Abhängigkeit von der relativen Position der Träger und dem Abstand zwischen Lichtsendern und Lichtempfängern mit jeweils angepasster Strahlstärke und Strahlform senden. Das heißt, die Lichtsender werden dynamisch an die jeweiligen Bedingungen, z.B. den Abstand zu den Lichtempfängern, während des Bewegungsablaufs angepasst.

Entsprechend können auch die Lichtempfänger aus mindestens zwei Einzelempfängern bestehen, deren Empfangshauptausrichtungen in unterschiedliche Richtungen weisen und unterschiedliche Empfindlichkeiten aufweisen, wobei die Einzelempfänger in Abhängigkeit von der relativen Position der Träger und dem Abstand zwischen Lichtsendern und Lichtempfängern mit jeweils angepasster Empfindlichkeit und Empfangskeule empfangen. Die Lichtempfänger werden somit dynamisch an die jeweiligen Bedingungen, z.B. den Abstand zu den Lichtsendern, während des Bewegungsablaufs angepasst.

Es kann auch vorgesehen sein, dass die Einzelsender und die Einzelempfänger in Abhängigkeit von der relativen Position der Träger und dem Abstand zwischen Lichtsendern und Lichtempfängern senden und empfangen oder inaktiv geschaltet sind. Beispielsweise werden die für den Nahbereich vorgesehenen Lichtsender und Lichtempfänger nur im Nahbereich sowie gegebenenfalls in unmittelbarer Nachbarschaft desselben zur Schaffung eines Überlapps mit dem nächsten Lichtsender bzw. Lichtempfänger betrieben und die für den Fernbereich vorgesehenen Lichtsender und Lichtempfänger werden nur im Fernbereich sowie gegebenenfalls in unmittelbarer Nachbarschaft desselben zur Schaffung eines Überlapps mit dem nächsten Lichtsender bzw. Lichtempfänger betrieben. Dazwischen liegende Bereiche können entsprechend mit dann aktiv geschalteten Lichtsendern und Lichtempfängern abgedeckt werden.

Alternativ können auch abhängig vom Bewegungszustand, d.h. der relativen Position oder dem Abstand zwischen den Lichtsendern und Lichtempfängern, unterschiedliche Teilmengen der Lichtwege zwischen Lichtsendern und Lichtempfängern zur Objektfeststellung ausgewertet werden.

Die Lichtsender können eine weitwinklige bis kugelförmige Abstrahlcharakteristik und die Lichtempfänger eine weitwinklige bis kugelförmige Empfangskeule aufweisen.

Je nach Anforderung und Einsatzbedingungen sind unterschiedliche Kombinationen aus optischer und elektrischer Anpassung sowie Aufteilungen in separate Winkelbereiche vorteilhaft. Eine überwiegend optische Anpassung ermöglicht große Reichweiten, kann aber durch die Bündelung in bestimmte Raumbereiche eine nachteilige Umspiegelungssituation bewirken. Bei überwiegend elektrischer Anpassung und weitem Schwenkwinkel beschränkt die geringe Signalintensität bzw. Empfindlichkeit weitwinkliger Lichtsender oder -empfänger die erzielbare Reichweite. Die Aufteilung in separate Winkelbereiche ermöglicht die Beherrschung großer Reichweiten bei Vermeidung von Umspiegelungsproblemen, erfordert aber mehr Sender- und/ oder Empfängerelemente als die vorgenannten Optionen.

Bei Anwendungen mit Translationsbewegung oder Bewegung mit translatorischer Komponente kann es vorgesehen sein, dass Lichtwege mit einer Strahlkomponente senkrecht zur translatorischen Bewegungsrichtung gegeneinander versetzter Lichtsender und Lichtempfänger ausgewertet werden. Eine optische Anpassung an eine Relativbewegung ist auch bei überwiegend translatorischen Relativbewegungen mit nur geringem oder keinem rotatorischen Anteil gemäß der Offenbarung möglich und vorteilhaft. Bei translatorischen Bewegungen ist nämlich eine Winkelveränderung zwischen Lichtachse und Lichtsender und/oder Lichtempfänger dadurch erzielbar, dass Lichtsender und Lichtempfänger senkrecht zur Bewegungsrichtung gegeneinander versetzt sind. Dieser Versatz bewirkt bei geringer Distanz eine größere Winkelabweichung als bei großer Distanz.

Zur Vermeidung von Fehlsignalen kann z.B. vorgesehen sein, dass die Lichtsender gepulst und/ oder kodiert senden, wobei die Lichtempfänger dementsprechend ausgelegt sind.

Im folgenden werden Ausführungsbeispiele beschrieben. Diese Darstellung dient lediglich zu Veranschaulichungszwecken und soll die Offenbarung nicht auf die konkret angegebenen Merkmalskombinationen einschränken. Es zeigen
Fig. 1: eine schematische Draufsicht einer zweiflügligen Innenschwenktür, die mit einem Lichtgitter versehen ist, in der geschlossenen Stellung,
Fig. 2: eine schematische Draufsicht einer zweiflügligen Innenschwenktür, die mit einem Lichtgitter versehen ist, in der geöffneten Stellung,
Fig. 3: eine schematische Draufsicht eines Flügels einer Innenschwenktür, die mit einem Lichtgitter mit Lichtsendern unterschiedlicher Strahlform versehen ist,
Fig. 4: eine schematische Draufsicht einer zweiflüglichen Innenschwenktür, die verschiedene Stellungen der Türflügel veranschaulicht,
Fig. 5: eine schematische Schnittansicht der Profilleiste einer zweiflügligen Innenschwenktür, die mit einem Lichtgitter versehen ist, wobei die Profilleiste, die Lichtgitterleiste und der Lichtstrahl für verschiedene Stellungen der Türflügel dargestellt sind,
Fig. 6 und Fig. 7: schematische Schnittansichten der Profilleiste einer zweiflügligen Innenschwenktür, die mit einem Lichtgitter versehen ist, mit einem feststehenden Türflügel, wobei die Profilleiste, die Lichtgitterleiste und der Lichtstrahl für verschiedene Stellungen der Türflügel dargestellt sind,
Fig**.** 8 bis Fig**.** 10: schematische Draufsichten einer zweiflügligen Innenschwenkktür, die mit einem Lichtgitter mit Lichtsendern unterschiedlicher Strahlform versehen ist, in drei Stellungen,
Fig. 11 bis Fig. 13: schematische Seitenansichten von mit translatorischer Komponente bewegbaren Türflügeln, die mit einem Lichtgitter versehen sind, wobei die für die Auswertung benutzten Lichtstrahlen dargestellt sind. Die Ausführungsbeispiele der Fig. 11 bis Fig. 13 sind nicht Teil der Erfindung.

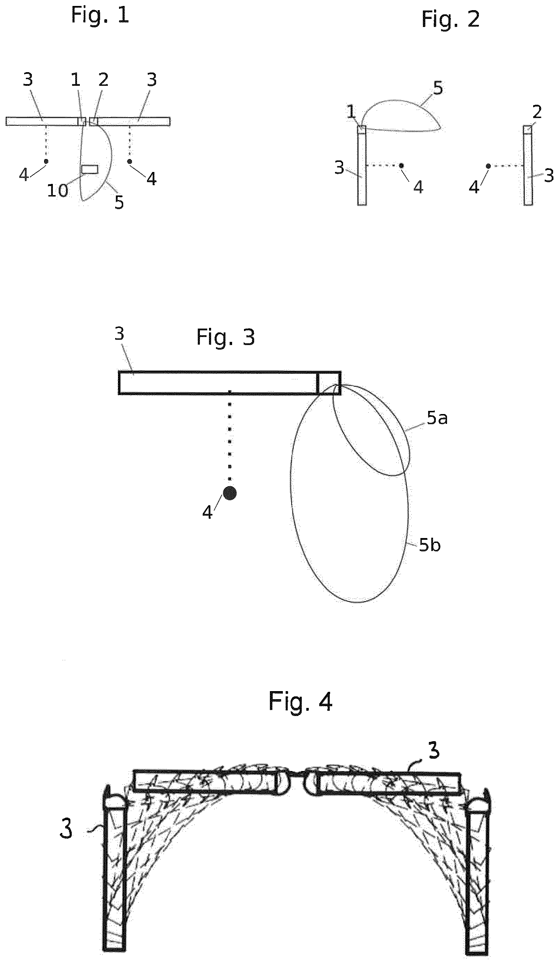

Fig. 4 zeigt schematisch den Bewegungsablauf und die verschiedenen Stellungen der Flügel von Innenschwenktüren, die beispielsweise bei Linienbussen zum Einsatz kommen.

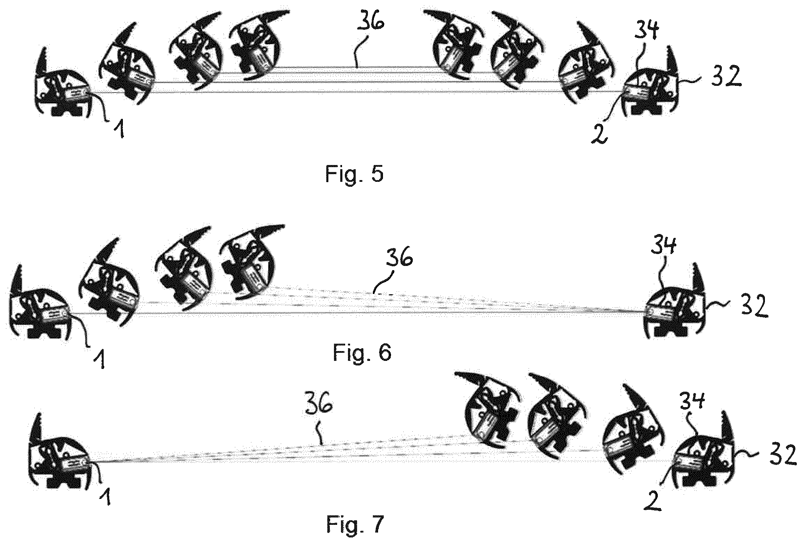

Fig. 5 zeigt schematisch eine Profilleiste 32 einer zweiflügligen Innenschwenktür, die mit einem

Lichtgitter versehen ist, bei verschiedenen Türflügelstellungen. Die in der Profilleiste angebrachte Lichtgitterleiste 34 ist dargestellt, des Weiteren ist der momentan auswertbare Lichtstrahl 36 zwischen den beiden Türflügeln eingezeichnet, des Weiteren die Lichtsender 1 und Lichtempfänger 2 des Lichtgitters.

Fig. 6 und 7 zeigen dies analog für den Fall, dass lediglich ein Türflügel betätigt, d.h. geschlossen wird, und der andere Türflügel in der offenen Stellung bleibt.

Im Folgenden wird auf Fig. 1 und Fig. 2 Bezug genommen. Diese zeigen eine zweiflüglige Schwenktüre in Draufsicht auf die Schwenkachsen 4 mit den Türflügeln 3, Sendereinheit 1, Empfängereinheit 2 und der als Polardiagramm beispielhaft dargestellten Strahlstärkeverteilung 5 der Lichtsender. In Fig. 1 ist die Schwenktüre geschlossen und der Abstand zwischen Sender 1 und Empfänger 2 sehr gering. Die in Richtung der Empfänger 2 weisende Komponente der Strahlstärke 5 der Sender 1 ist dazu passend niedrig. In Fig. 2 ist die Schwenktüre in geöffneter Stellung dargestellt, in dieser Stellung ist die Entfernung zwischen Sender 1 und Empfänger 2 groß und die Strahlstärke 5 der Sender 1 in Richtung der Empfänger 2 ebenfalls groß. Bei einer den Sendern äquivalenten Strahlform der Empfänger 2 gleichen sich Entfernung und winkelabhängige Umwandlungseffizienz der Lichtsender und Lichtempfänger weitgehend aus und die von den Lichtempfängern abgegebenen Empfangssignale bleiben über die Schwenkbewegung der Türe weitgehend konstant. Die Strahlform der Empfänger ist in der Zeichnung der Übersichtlichkeit halber nicht dargestellt.

Ein Nachteil der in Fig. 1 bei geschlossener Türe gezeigten Strahlform 5 ist der hohe Anteil an senkrecht zu den Türflügeln 3 abgestrahlter Leistung bzw. Empfängerempfindlichkeit, wodurch in dieser Richtung befindliche Objekte wie der Gegenstand 10 ein hohes Umspiegelungsrisiko darstellen. Diese optische Lösung ist deshalb nur sinnvoll anwendbar, wenn ein derartiges Umspiegelungsrisiko nicht vorliegt oder toleriert werden kann.

Zur Reduzierung des in Fig. 1 dargestellten Umspiegelungsproblems bei Beibehaltung oder gar Steigerung der Reichweite ist es besonders vorteilhaft, den durch die Bewegung erforderten Winkelbereich in mehrere Teilbereiche aufzuteilen, die separaten Sender- und Empfängerelementen zugeordnet sind. Dies ist in Fig. 3 für einen Türflügel 3 einer Schwenktüre beschrieben: Einzel- oder Teilsender oder -empfänger mit der Strahlform 5a decken den Bereich kleiner Türöffnung ab, wobei Einzel- oder Teilsendern oder -empfängern mit der Strahlform 5b zugeordnete Lichtwege nicht zur Objektdetektion herangezogen werden und somit kein Umspiegelungsproblem verursachen. Teilsender oder -empfänger mit der Strahlform 5b decken den Bereich großer Türöffnung ab.

Eine Variante, die getrennte Lichtsender und Lichtempfänger für Teilbereiche des Winkels vorsieht, diese aber parallel betreibt, statt sie getrennt auszuwerten, ist denkbar und vorteilhaft, um einen besonders großen Winkelbereich abzudecken.

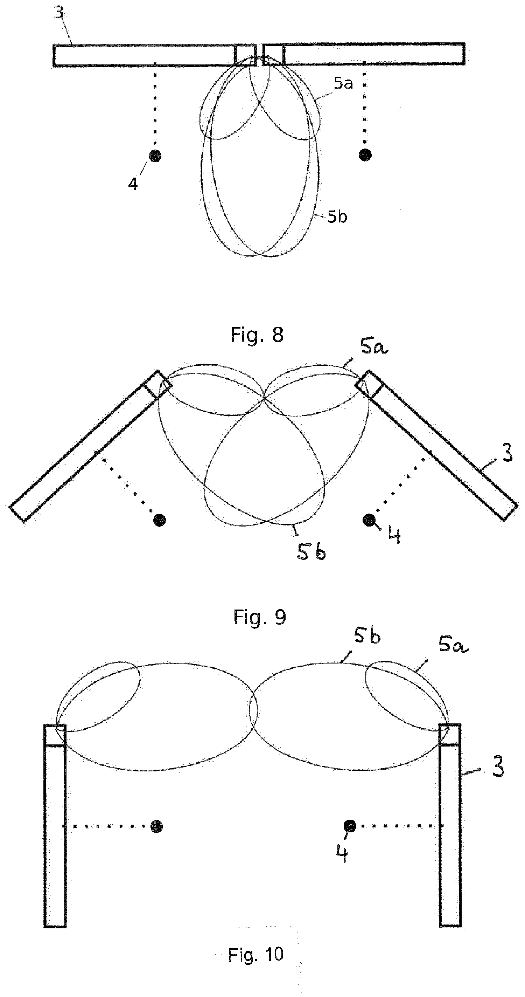

Fig. 8 bis 10 veranschaulichen die Verhältnisse des sich durch die verschiedenen Strahlformen und Türstellungen ergebenden Überwachungsbereichs. Fig. 8 zeigt analog Fig. 1 eine Draufsicht einer zweiflügligen Innenschwenktür, die mit einem Lichtgitter versehen ist, in der geschlossenen Stellung. Lichtsender und Lichtempfänger mit der Strahlform 5a dienen der Überwachung nahe der Schließstellung. Lichtsender und Lichtempfänger mit der Strahlform 5b sind entweder nicht aktiv geschaltet oder die empfangenen Signale werden nicht zur Auswertung verwendet. Fig. 9 zeigt den Überlappbereich der Strahlformen 5a und 5b. Die Verhältnisse sind bei dieser halboffenen Türstellung derart, dass vorzugsweise Lichtsender und Lichtempfänger beider Strahlformen 5a und 5b aktiv geschaltet sind und ihre Signale benutzt werden. Fig. 10 veranschaulicht die Verhältnisse bei völlig geöffneter Stellung. Ausschließlich die Strahlform 5b ermöglicht eine Überwachung des Bereichs zwischen den Türflügeln.

Ähnliche Bewegungsabläufe wie bei Innenschwenktüren findet man beispielsweise bei Falttüren, die oft bei Bussen und Bahnen eingesetzt werden. Zur Vermeidung von Wiederholungen werden diese für Falttüren somit nicht erneut beschrieben. Auch finden sich Teile der Bewegungsabläufe bei anderen Türtypen, beispielsweise Schwenk-Schiebetüren.

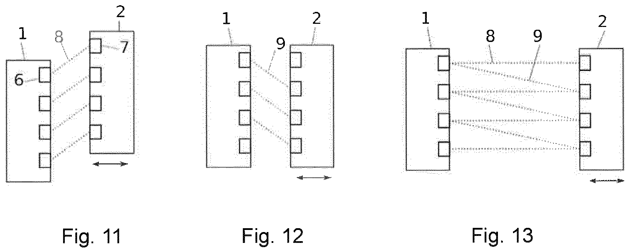

Fig. 11 zeigt ein an einer Schiebetüre ohne rotatorische Bewegungskomponente mitfahrend montiertes Lichtgitter. Die Sendereinheit 1 mit den Lichtsendern 6 ist in der Höhe versetzt zur Empfängereinheit 2 mit den Lichtempfängern 7 montiert, wodurch sich ein mit der Öffnungsweite veränderlicher Winkelversatz ergibt. Dieser veränderliche Winkel ermöglicht die vorgehend beschriebene Methode der optischen Anpassung von Signalstärke und Empfindlichkeit an den Bewegungszustand.

Es ist bekannt, bei Lichtgittern neben den "geraden" Strahlengängen zwischen Lichtsendern und Lichtempfängern mit gleicher Ordnungszahl auch solche zu verwenden, die "schräg" verlaufen, also von Lichtsender n zu Lichtempfänger n+k und/oder n-k mit k>0. Im bereits genannten Fall der überwiegend translatorischen Bewegung ist bei Lichtgittern eine vorteilhafte Gestaltungsmöglichkeit, dass im Bereich kleiner Abstände zwischen Lichtsender und Lichtempfänger die dann zur Übersteuerung führenden "geraden" Lichtwege nicht mehr verwendet werden, sondern nur noch die Strahlengänge zu den gegenüberliegenden Elementen auf den Positionen n+1 und/oder n-1 oder sogar stärker versetzte Kombinationen. Diese Anordnung zeigen Fig. 12 und Fig. 13 . Im Übersteuerung führenden "geraden" Lichtwege nicht mehr verwendet werden, sondern nur noch die Strahlengänge zu den gegenüberliegenden Elementen auf den Positionen n+1 und/oder n-1 oder sogar stärker versetzte Kombinationen. Diese Anordnung zeigen Fig. 12 und Fig. 13 . Im Gegensatz zu Fig. 11 sind hier die Lichtgitter auf gleicher Höhe montiert, dafür werden bei der in Fig. 12 gezeigten geringen Öffnungsweite nur "schräge" Strahlen 9 ausgewertet, während bei der in Fig. 6 gezeigten großen Öffnungsweite auch "gerade" Strahlen 8 ausgewertet werden. Die Methoden zur Ermittlung des Bewegungszustandes unterscheiden sich nicht von denen bei Vorliegen rotatorischer Bewegungen.

Alle Ausführungen gelten auch für Anwendungen, bei denen nur eine Seite der Lichtgitteranordnung beweglich und die andere Seite fest montiert ist.

Der einfacheren Darstellung halber beschränken sich die Ausführungen und Zeichnungen auf Lichtgitter, bei denen eine Seite nur Lichtsender enthält und die andere Seite nur Lichtempfänger. Die genannten Prinzipien lassen sich ebenso auf Lichtgitter anwenden, bei denen in einem Gehäuse sowohl Sender- als auch Empfängerelemente angeordnet sind, das heißt, sich die Strahlrichtung abwechselt.

Die Auswerteschaltung ist in den Figuren der einfachen Darstellung halber nicht gezeigt, sie kann sich ganz oder teilweise innerhalb der die Lichtsender und/oder Lichtempfänger beinhaltenden Gehäuse befinden oder in einem separaten Gehäuse.

## Patentansprüche

1. Lichtgitteranordnung, umfassend:
einen oder mehrere Lichtsender (1) und einen oder mehrere Lichtempfänger (2), wobei die Lichtsender (1) und Lichtempfänger (2) auf Trägern montiert sind, von denen ein Träger fest montiert ist und der andere rotatorisch beweglich ist,
wobei basierend auf dem jeweiligen Abstand zwischen Lichtsender(n) (1) und Lichtempfänger(n) (2) die Sendeenergie und die Signalbewertung geändert werden,
wobei die Komponente der Strahlstärke in Richtung der Lichtempfänger (2) und/oder die Strahlform der Lichtsender (1) und/oder die Empfindlichkeit und/oder die Empfangskeule der Lichtempfänger (2) in Abhängigkeit von der relativen Position der Träger und dem Abstand zwischen Lichtsendern (1) und Lichtempfängern (2) angepasst wird.

2. Lichtgitteranordnung nach Anspruch 1, wobei die Strahlform der Empfänger (2) entsprechend den Änderungen der Strahlstärke und Strahlform der Lichtsender (1) angepasst wird.

3. Lichtgitteranordnung nach Anspruch 1 oder 2, wobei die Lichtsender (1) und/oder Lichtempfänger (2) auf beweglichen Halterungen oder Leisten angebracht sind.

4. Lichtgitteranordnung nach Anspruch 1 oder 2, wobei einstellbare oder verstellbare Lichtlenkelemente für die Lichtsender und/oder Lichtempfänger vorgesehen sind.

5. Lichtgitteranordnung nach einem der Ansprüche 1 bis 4, wobei die Lichtsender (1) aus mindestens zwei Einzelsendern bestehen, deren Sendehauptkomponenten in unterschiedliche Richtungen weisen und unterschiedliche Strahlstärke aufweisen, und/oder die Lichtempfänger (2) aus mindestens zwei Einzelempfängern bestehen, deren Empfangshauptausrichtungen in unterschiedliche Richtungen weisen und die unterschiedliche Empfindlichkeiten aufweisen.

6. Lichtgitteranordnung nach einem der Ansprüche 1 bis 4, wobei die Lichtsender (1) aus mindestens zwei Einzelsendern bestehen, deren Sendehauptkomponenten in unterschiedliche Richtungen weisen und unterschiedliche Strahlstärke aufweisen, wobei die Einzelsender in Abhängigkeit von der relativen Position der Träger und dem Abstand zwischen Lichtsendern und Lichtempfängern (2) mit jeweils angepasster Strahlstärke und Strahlform senden.

7. Lichtgitteranordnung nach einem der Ansprüche 1 bis 4, wobei die Lichtempfänger (2) aus mindestens zwei Einzelempfängern bestehen, deren Empfangshauptausrichtungen in unterschiedliche Richtungen weisen und unterschiedliche Empfindlichkeiten aufweisen, wobei die Einzelempfänger in Abhängigkeit von der relativen Position der Träger und dem Abstand zwischen Lichtsendern (1) und Lichtempfängern (2) mit jeweils angepasster Empfindlichkeit und Empfangskeule empfangen.

8. Lichtgitteranordnung nach einem der Ansprüche 5 bis 7, wobei die Einzelsender und die Einzelempfänger in Abhängigkeit von der relativen Position der Träger und dem Abstand zwischen Lichtsendern (1) und Lichtempfängern (2) senden und empfangen oder inaktiv geschaltet sind.

9. Lichtgitteranordnung nach einem der Ansprüche 1 bis 8, wobei die Lichtsender eine kugelförmige oder weitwinklige Abstrahlcharakteristik und die Lichtempfänger eine kugelförmige oder weitwinklige Empfangskeule aufweisen.

10. Lichtgitteranordnung nach Anspruch 3, wobei Teile eines Gehäuses oder der Halterung als Lichtlenkelemente ausgebildet sind.

11. Lichtgitteranordnung nach einem der Ansprüche 1 bis 10, wobei die Lichtsender gepulst senden.

12. Lichtgitteranordnung nach einem der Ansprüche 1 bis 11, wobei die Lichtsender kodiert senden.

## Claims

1. A light grid arrangement, comprising:
one or more light transmitters (1) and one or more light receivers (2), wherein the light transmitters (1) and light receivers (2) are mounted on supports, one of which is fixedly mounted and the other is rotatably movable,
wherein the transmission energy and the signal evaluation are changed, based on the respective distance between the light transmitter(s) (1) and the light receiver(s) (2),
wherein the component of the beam intensity in the direction of the light receivers (2) and/or the beam shape of the light transmitters (1) and/or the sensitivity and/or the reception lobe of the light receivers (2) is adapted, depending on the relative position of the supports and the distance between light transmitters (1) and light receivers (2).

2. The light grid arrangement according to claim 1, wherein the beam shape of the receivers (2) is adjusted according to the changes in the beam intensity and beam shape of the light transmitters (1).

3. The light grid arrangement according to claim 1 or 2, wherein the light transmitters (1) and/or light receivers (2) are mounted on movable holders or strips.

4. The light grid arrangement according to claim 1 or 2, wherein tuneable or adjustable light guide elements are provided for the light transmitters and/or light receivers.

5. The light grid arrangement according to any one of claims 1 to 4, wherein the light transmitters (1) consist of at least two individual transmitters, the main transmission components of which point in different directions and have different beam intensities, and/or wherein the light receivers (2) consist of at least two individual receivers, the main reception orientations of which point in different directions and have different sensitivities.

6. The light grid arrangement according to any one of claims 1 to 4, wherein the light transmitters (1) consist of at least two individual transmitters, the main transmission components of which point in different directions and have different beam intensities, wherein the individual transmitters transmit with an adapted beam intensity and beam shape, depending on the relative position of the supports and the distance between the light transmitters and the light receivers (2).

7. The light grid arrangement according to any one of claims 1 to 4, wherein the light receivers (2) consist of at least two individual receivers, the main reception orientations of which point in different directions and have different sensitivities, wherein the individual receivers receive with an adapted sensitivity and reception lobe, depending on the relative position of the supports and the distance between the light transmitters (1) and the light receivers (2).

8. The light grid arrangement according to any one of claims 5 to 7, wherein the individual transmitters and the individual receivers transmit and receive or are switched to inactive depending on the relative position of the supports and the distance between the light transmitters (1) and the light receivers (2).

9. The light grid arrangement according to any one of claims 1 to 8, wherein the light transmitters have a spherical or wide-angle radiation characteristic and the light receivers have a spherical or wide-angle reception lobe.

10. The light grid arrangement according to claim 3, wherein parts of a housing or the holder are configured as light-guiding elements.

11. The light grid arrangement according to any one of claims 1 to 10, wherein the light emitters emit in a pulsed manner.

12. The light grid arrangement according to any one of claims 1 to 11, wherein the light emitters emit in a coded manner.

## Revendications

1. Ensemble de barrière lumineuse, comprenant :
un ou plusieurs émetteurs de lumière (1) et un ou plusieurs récepteurs de lumière (2), dans lequel les émetteurs de lumière (1) et les récepteurs de lumière (2) sont montés sur des supports, dont un est fixe et l'autre est mobile en rotation,
dans lequel sur la base de la distance respective entre l'émetteur(s) de lumière (1) et le(s) récepteur(s) de lumière (2), l'énergie d'émission et l'évaluation de signaux sont changées,
dans lequel la composante de l'intensité de faisceau en direction des récepteurs de lumière (2) et/ou la forme de faisceau des émetteurs de lumière (1) et/ou la sensibilité et/ou le lobe de réception des récepteurs de lumière (2) est adapté en fonction de la position relative des supports et de la distance entre les émetteurs de lumière (1) et les récepteurs de lumière (2).

2. Ensemble de barrière lumineuse selon la revendication 1, dans lequel la forme de faisceau des récepteurs (2) est adaptée en fonction des variations de l'intensité de faisceau et de la forme de faisceau des émetteurs de lumière (1).

3. Ensemble de barrière lumineuse selon la revendication 1 ou 2, dans lequel les émetteurs de lumière (1) et/ou les récepteurs de lumière (2) sont montés sur des supports ou des réglettes mobiles.

4. Ensemble de barrière lumineuse selon la revendication 1 ou 2, dans lequel des éléments de conduction de lumière réglables ou ajustables sont prévus pour les émetteurs de lumière et/ou les récepteurs de lumière.

5. Ensemble de barrière lumineuse selon l'une des revendications 1 à 4, dans lequel les émetteurs de lumière (1) sont constitués d'au moins deux émetteurs individuels, dont les principales composantes d'émission pointent dans différentes directions et ont différentes intensités de faisceau et/ou les récepteurs de lumière (2) sont constitués d'au moins deux récepteurs individuels, dont les principales orientations de réception pointent dans différentes directions et ont différentes sensibilités.

6. Ensemble de barrière lumineuse selon l'une des revendications 1 à 4, dans lequel les émetteurs de lumière (1) sont constitués d'au moins deux émetteurs individuels, dont les principales composantes d'émission pointent dans différentes directions et ont différentes intensités de faisceau, dans lequel les émetteurs individuels émettent en fonction de la position relative des supports et de la distance entre les émetteurs de lumière et les récepteurs de lumière (2) avec une intensité de faisceau et une forme de faisceau respectivement adaptées.

7. Ensemble de barrière lumineuse selon l'une des revendications 1 à 4, dans lequel les récepteurs de lumière (2) sont constitués d'au moins deux récepteurs individuels, dont les orientations principales de réception pointent dans différentes directions et ont différentes sensibilités, dans lequel les récepteurs individuels reçoivent en fonction de la position relative des supports et de la distance entre les émetteurs de lumière (1) et les récepteurs de lumière (2) avec une sensibilité et un lobe de réception respectivement adaptés.

8. Ensemble de barrière lumineuse selon l'une des revendications 5 à 7, dans lequel les émetteurs individuels et les récepteurs individuels émettent et reçoivent ou sont commutés sur l'état inactif en fonction de la position relative des supports et de la distance entre les émetteurs de lumière (1) et les récepteurs de lumière (2).

9. Ensemble de barrière lumineuse selon l'une des revendications 1 à 8, dans lequel les émetteurs de lumière ont une caractéristique d'émission sphérique ou à grand angle et les récepteurs de lumière ont un lobe de réception sphérique ou à grand angle.

10. Ensemble de barrière lumineuse selon la revendication 3, dans lequel des parties d'un boîtier ou du support sont réalisées sous forme d'éléments de conduction de lumière.

11. Ensemble de barrière lumineuse selon l'une des revendications 1 à 10, dans lequel les émetteurs de lumière émettent de manière pulsée.

12. Ensemble de barrière lumineuse selon l'une des revendications 1 à 11, dans lequel les émetteurs de lumière émettent de manière codée.
